# EUROPÄISCHE PATENTSCHRIFT

(11) **EP 3 177 758 B1**
(45) Veröffentlichungstag und Bekanntmachung des Hinweises auf die Patenterteilung: **29.06.2022**
(21) Anmeldenummer: 15730691.1
(22) Anmeldetag: 20.06.2015
(51) Int. Cl.: D01G 23/04, G01G 17/02, G01G 21/23, G01G 23/06

(54) **VORRICHTUNG ZUM MISCHEN VON FASERKOMPONENTEN**
DEVICE FOR MIXING FIBER COMPONENTS
DISPOSITIF DE MÉLANGE DE COMPOSANTS FIBREUX

(30) Priorität: 07.08.2014 DE 102014111290
(43) Veröffentlichungstag der Anmeldung: 14.06.2017
(73) Patentinhaber: Trützschler Group SE, 41199 Mönchengladbach (DE)
(72) Erfinder: TEMBURG, Konrad, 41069 Mönchengladbach (DE)
(86) Internationale Anmeldenummer: PCT/EP2015/001249
(87) Internationale Veröffentlichungsnummer: WO 2016/020022

(56) Entgegenhaltungen:
- WO-A1-2013/076923
- WO-A1-2014/083588
- WO-A2-2012/027803
- DE-A1-102004 048 222
- GB-A- 2 060 947
- JP-U- H0 181 535

## Beschreibung

Die Erfindung betrifft eine Vorrichtung zum Mischen von Faserkomponenten, zum Beispiel Faserflocken, insbesondere in der Spinnereivorbereitung, Faservliesherstellung oder dergleichen, bei der die zu mischenden Faserkomponenten in einen Wiegebehälter förderbar sind, wobei die Faserkomponenten nach erfolgtem Wiegen im Wiegebehälter auf einem Mischband abwerfbar sind.

Zum Mischen von Faserkomponenten werden Wiegekastenspeiser verwendet, bei denen Faserballen über einen Auflegetisch und einen anschließenden Zuführtisch grob zerkleinert einem Füllraum zugeführt werden. In diesem Füllraum ist ein Nadellattentuch angeordnet, das Fasermaterial in groben Flocken aus den Faserballen herauslöst und gegen eine Rückstreichwalze fördert, die überschüssige Faserflocken in den Füllraum zurückbefördert. Eine der Rückstreichwalze nachgeordnete Öffnungswalze führt die aufgelockerten Faserflocken einem Wiegebehälter zu, der die Faserflocken nach einem vorgegebenen Füllgewicht auf ein Mischband abwirft. Üblicherweise sind mehrere Wiegekastenspeiser entlang eines Mischbandes angeordnet, auf dem verschiedene Chemiefasern, Baumwolle oder rückgewonnene Abfallfasern gemischt werden, die nach weiterer Bearbeitung beispielsweise einer Karde zugeführt werden.

Es ist bekannt, den Wiegebehälter mit unterschiedlichen Geschwindigkeiten zu befüllen, wobei eine Grobdosierung mit hoher und eine Feindosierung mit geringer Geschwindigkeit erfolgen kann. Ziel ist es, den Wiegebehälter in möglichst kurzer Zeit zu füllen. Zur genauen Gewichtsermittlung ist es aber notwendig, dass sich die Waage im Stillstand befindet, d.h., dass sie keine durch das Füllen verursachten Schwingungen ausführt.

Das Austarieren der Waage kann bis zu 5 Sekunden dauern, bis das exakte Füllgewicht des Wiegebehälters ermittelt werden kann. Hat der Wiegebehälter sein exaktes Sollgewicht erreicht, entleert er sich auf einem sogenannten Mischband. Üblicherweise sind mehrere, mindestens aber zwei dieser Wiegekastenspeiser an dem Mischband angeordnet. Zum Beschleunigen des Wiegezyklus aller Wiegekastenspeiser ist ein schnelles und genaues Befüllen der Wiegebehälter wünschenswert. Hier ist nach dem Stand der Technik bekannt, vor dem Wiegebehälter Klappen vorzusehen, über die eine Vorbefüllung für den nächsten Wiegezyklus erfolgen kann, während dessen der Wiegebehälter seine Schwingungen reduziert, also austariert wird.

Die DE 102004048222 A1 zeigt mehrere in Reihe angeordnete Schalenwaagen zum Abwiegen von Faserflocken, die quer zur Förderrichtung eines darunter angeordneten Abzugsbandes verfahrbar sind.

In der GB 2060947 A wird eine Schalenwaage offenbart, bei dem der Wiegebehälter zwischen aufeinanderfolgenden Wiegevorgängen austariert wird.

Die WO 2014/083588 A1 offenbart einen Wiegebehälter, der mittels Verbindungsstreben an den Wiegezellen aufgehängt ist.

Die JP 1-81535 zeigt einen Wiegebehälter, der im Bereich seiner Stirnseiten an einem umlaufenden Rahmen eingehängt wird.

Es ist Aufgabe der Erfindung eine Vorrichtung zum Mischen von Faserkomponenten mit einem Wiegebehälter zu schaffen, der in sehr kurzer Zeit befüllt werden kann und eine hohe Genauigkeit aufweist. Dabei soll die Kalibrierung und Montage der Wägesensoren verbessert werden.

Die Erfindung löst die gestellte Aufgabe durch die Lehre nach Anspruch 1; weitere vorteilhafte Ausgestaltungsmerkmale der Erfindung sind durch die Unteransprüche gekennzeichnet.

Gemäß der technischen Lehre nach Anspruch 1 umfasst die Vorrichtung zum Mischen von Faserkomponenten Fördermittel und einen Wiegebehälter, bei der die zu mischenden Faserkomponenten in einen Wiegebehälter förderbar sind, wobei die Faserkomponenten nach erfolgtem Wiegen im Wiegebehälter auf einem Mischband abwerfbar sind.

Die Erfindung ist dadurch gekennzeichnet, dass der Wiegebehälter an nur drei

Aufhängepunkten gelagert ist. Im Gegensatz zum Stand der Technik mit nur zwei Aufhängepunkten verteilt sich die Gewichtskraft des Wiegebehälters besser, wodurch der Wiegebehälter breiter gebaut werden kann, eine größere Masse aufnehmen kann und damit die Fasern gleichmäßiger auf dem Mischband verteilt. Entscheidend ist, dass sich bei der Lagerung über drei Aufhängepunkte der Wiegebehälter schneller auspendelt, so dass der Wiegezyklus deutlich verkürzt wird.

Der Wiegebehälter ist als nach oben offene Schalenwaage ausgebildet, die unterhalb von Seitenwänden betätigbare Auswurfklappen aufweist. Dabei sind die Aufhängepunkte an den Längsseiten der Seitenwände so angeordnet, dass ein möglichst großer Abstand zwischen den Aufhängepunkten besteht. Damit kann die Zeit zum Auspendeln des Wiegebehälters weiter verkürzt werden.

Um ein möglichst genaues Messergebnis zu erreichen, weist jeder Aufhängepunkt einen Wägesensor auf. Trotz der unterschiedlichen Belastung auf die Wägesensoren kann eine Meßgenauigkeit von unter 1 % erreicht werden.

Der Wiegebehälter ist mittels der drei Aufhängepunkte an einem Rahmen gelagert, der innerhalb der Vorrichtung zum Mischen der Faserkomponenten quer zur Laufrichtung des Mischbandes verfahrbar ist. Damit kann die Abwurfposition der gewogenen Faserflocken genau bestimmt werden, so dass auf dem darunter angeordneten Mischband eine gute Durchmischung verschiedener Fasern erfolgt.

Der Rahmen mit der Schalenwaage ist ausgebildet, gemeinsam aus oder in die Vorrichtung zum Mischen der Faserkomponenten demontiert oder montiert zu werden. Die Wägesensoren lassen sich dabei in einer Vormontage außerhalb des Wiegekastenspeisers genau und einfach kalibrieren, was die gesamte Montage- und Inbetriebnahmezeit verkürzt.

Eine platzsparende Ausführung des Rahmen wird durch Längs- und Querträger gebildet, wobei die Querträger als nach außen offenes U-Profil ausgebildet sind. In das U-Profil kann eine Rahmenaufhängung mit oder ohne Linearführung bzw. Antrieb eingreifen.

Eine weitere Reduzierung des Wiegezyklus kann dadurch erreicht werden, dass jeder Aufhängepunkt einen Dämpfer aufweist.

Besonders vorteilhaft ist, wenn jeder Aufhängepunkt eine kugelförmige oder konvexe Lagerung aufweist, die mit einer ebenen Fläche zusammenwirkt. Damit kann das Auspendeln der Schalenwaage am Rahmen beschleunigt werden.

Die Erfindung wird anhand der beiliegenden Zeichnungen näher erläutert; in diesen zeigt
- Fig.1: einen Schnitt durch einen Wiegekastenspeiser;

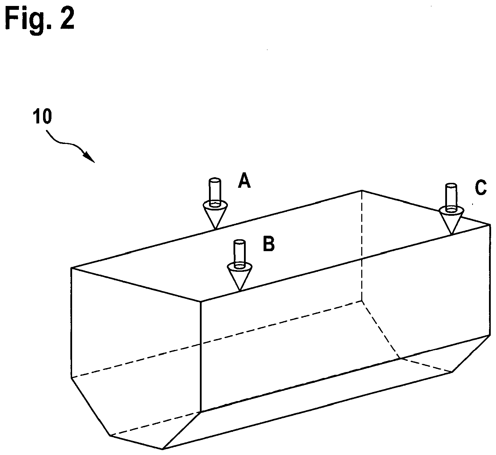

- Fig. 2: eine schematische Darstellung der erfindungsgemäßen Schalenwaage;
- Fig. 3: eine Darstellung der Schalenwaage mit einem tragenden Rahmen;
- Fig. 4: eine vergrößerte Detaildarstellung eines Lastsensors aus Figur 3.

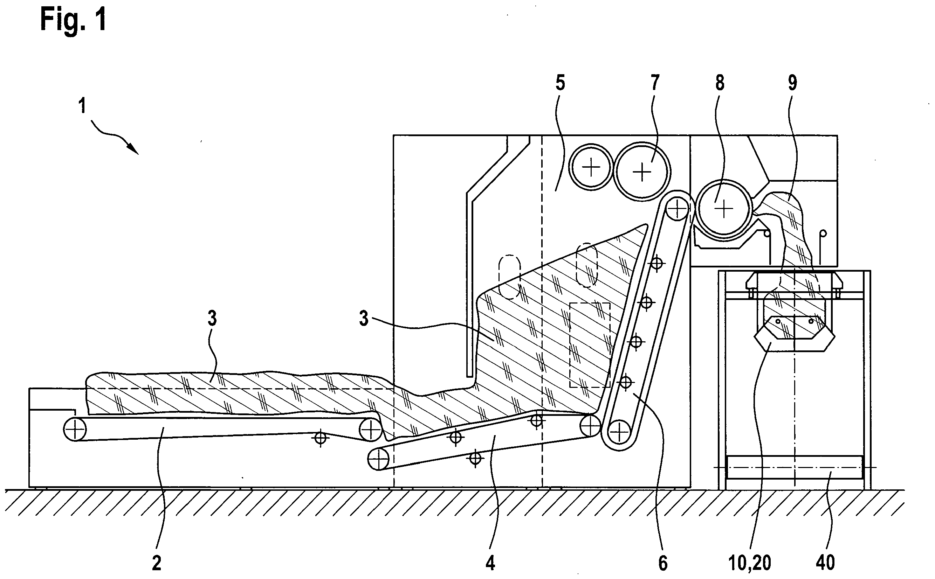

In Figur 1 ist ein Wiegekastenspeiser 1 dargestellt, bei dem beispielsweise ein Ballen Baumwolle oder eine textile Fasermischung aus Faserflocken 3 auf einen Auflegetisch 2 abgelegt und über einen Zuführtisch 4 einem Füllraum 5 von unten zugeführt wird. Ein Nadellattentuch 6 transportiert größere zusammenhängende Stücke an Faserflocken 3 zu einer Rückstreichwalze 7, die die hoch transportierte Menge so reduziert dass eine nachfolgende Öffnungswalze 8 eine genauer dosierbare Menge einem Auswurfschacht 9 zuführt. Dieser Auswurfschacht 9 kann direkt mit der Schalenwaage 10 verbunden sein. Es ist aber auch möglich, den Auswurfschacht 9 über ein nicht dargestelltes Klappensystem oder einen Verschluss zu verschließen. Wenn die Schalenwaage 10 mit einer vorgegebenen Menge an Faserflocken gefüllt ist, öffnet diese ihre Auswurfklappen 11a, 11b und liefert die Faserflocken auf ein Mischband 40. Üblicherweise wird dieses Mischband 40 von mehreren in Reihe geschalteten Wiegekastenspeisern 1 befüllt.

Nach dem Stand der Technik sind die herkömmlichen Schalenwaagen an den schmalen Stirnseiten mittig mit jeweils einer Messezelle versehen.

Dies hat den Nachteil, dass die Schalenwaage sehr lange auspendeln muss, bis die verbleibenden Schwingungen keinen oder nur noch einen sehr geringen Einfluss auf das Messergebnis hat. Die erfindungsgemäße Schalenwaage 10 weist eine 3-Punkt-Aufhängung auf, bei der zwei Aufhängepunkte B, C mit je einem Wägesensor 17 zur Ermittlung des Gewichtes an einer Längsseite und ein weiterer Aufhängepunkt A mit einem Wägesensor 17 an der gegenüberliegenden zweiten Längsseite angeordnet ist. Da sich die Gewichtskraft auf drei Aufhängepunkte verteilt, ist einerseits eine stabilere Bauweise der Schalenwaage 10 möglich, und andererseits wird dadurch eine deutlich kürzere Beruhigungszeit erreicht, so dass der ganze Wiegekastenspeiser 1 das Mischband 40 viel schneller beschicken kann. Der konstruktive Aufbau wird einfacher, da die Schalenwaage 10 nicht mehr im Bereich der Stirnseiten durch Anschläge oder Dämpfer geklemmt werden muss. Die stabilere Bauweise ergibt sich dadurch, dass sich die Gewichtskraft auf insgesamt drei mit Wägesensoren 17 ausgestattete Aufhängepunkte A, B, C verteilt. Die Schalenwaage 10 kann dadurch breiter gebaut werden, wodurch sich beim Abwurf der abgewogenen Faserflocken auf das Mischband 40 eine bessere Verteilung ergibt. Infolge dessen kann die Schalenwaage 10 größer gebaut werden, wodurch sich das Aufnahmevolumen und damit die Produktivität des Wiegekastenspeisers 1 vergrößert.

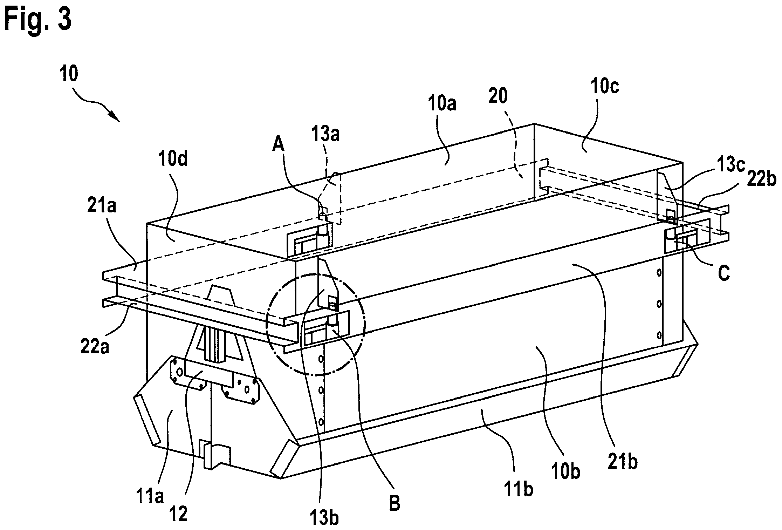

Vorteilhafterweise werden die Aufhängepunkte A, B, C in einem möglichst großen Abstand voneinander an der Schalenwaage 10 angeordnet. In diesem Ausführungsbeispiel nach der Figur 3 befinden sich die Aufhängepunkte B, C möglichst weit auseinander an einer ersten Längsseite der Schalenwaage 10, also im Bereich der Stirnseiten. Der Aufhängepunkt A ist hingegen mittig an der zweiten Längsseite der Schalenwaage 10 angeordnet. Damit ergeben sich die größtmöglichen Abstände zwischen den Aufhängepunkten A, B, C, wodurch die Beruhigungszeit weiter verkürzt wird.

Die Schalenwaage 10 nach Figur 3 ist ähnlich wie ein nach oben offener rechteckiger Behälter mit zwei langen Seitenwänden 10a, 10b und zwei kurzen Seitenwänden 10c, 10d ausgebildet. Die Seitenwände 10c, 10d bilden dabei die Stirnseiten. Der Boden der Schalenwaage 10 wird durch zwei symmetrisch angeordnete Auswurfklappen 11a, 11b verschlossen. Ein automatisches Betätigungssystem 12 für die Auswurfklappen 11a, 11b ist an jeder Stirnseite der Schalenwaage 10 bzw. an den Seitenwänden 10c, 10d angeordnet. Am oberen Rand der Schalenwaage 10 ist für jeden Aufhängepunkt A, B, C ein Flansch 13a -13c angeordnet. Ein umlaufender Rahmen 20 mit zwei Längsträgern 21a, 21b und zwei Querträgern 22a, 22b nimmt die Aufhängepunkte A, B, C auf, auf denen sich die Schalenwaage 10 mit den Flanschen 13a - 13c abstützt. Die stirnseitigen Querträger 22a, 22b sind so ausgebildet, dass sie in eine Rahmenaufhängung 30 des Wiegekastenspeisers 1 einschiebbar sind. Das hat zum einen den Vorteil der erleichterten Montage, da die Schalenwaage 10 mit dem Rahmen 20 vormontiert und kalibriert in den Wiegekastenspeiser 1 eingeschoben werden kann. Weiterhin kann über eine Vorrichtung die Schalenwaage 10 quer zur Laufrichtung des Mischbandes 40 verfahrbar angeordnet sein, wodurch das Mischband 40 genauer beschickt werden kann. Eine sehr platzsparende Ausführungsform wird dadurch erreicht, dass die Querträger 22a, 22b als nach außen offene U-Profile ausgebildet sind. Das offene U ist so angeordnet, dass es von den Stirnseiten 10c, 10d der Schalenwaage 10 weg zeigt. Innerhalb des offenen U-Profiles kann eine Gleit- oder Verfahrvorrichtung angeordnet sein oder eingreifen, mit dem die Schalenwaage 10 einschließlich Rahmen 20 quer über die Breite des Mischbandes 40 bzw. quer zu dessen Laufrichtung verfahrbar ausgebildet ist. Ein weiterer Vorteil der Aufhängung der Schalenwaage 10 an einem umlaufenden Rahmen ist, dass die Vibrationen des Wiegekastenspeisers 1 weniger Einfluss auf das Meßsystem haben, da die Aufhängepunkte der Schalenwaage 10 an dem Rahmen 20 gedämpft werden können.

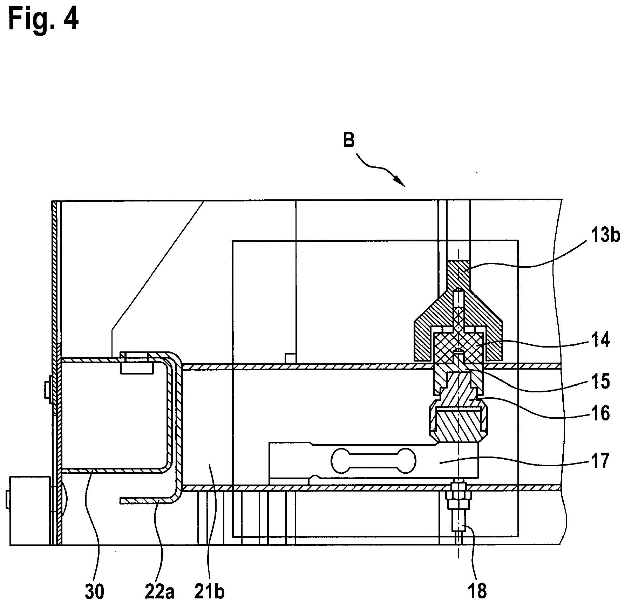

Hierzu wird auf die Detailansicht von Figur 4 verwiesen, bei der der Aufhängepunkt B vergrößert dargestellt ist. Der Rahmen 20 der Schalenwaage 10, dessen u-förmiger Querträger 22a im Schnitt zu sehen ist, liegt auf einer Rahmenaufhängung 30 auf, die innerhalb des Abwurfschachtes 9 des Wiegekastenspeisers 1 angeordnet ist. Dabei greift in diesem Ausführungsbeispiel ein fast quadratisches Hohlprofil in den u-förmigen Querträger 22a ein. Beide Bauteile weisen so viel Spielraum auf, dass eine Gleit- oder Wälzlagerung zum Verfahren des Rahmens nachträglich eingebaut werden kann. An dem Längsträger 21b des Rahmens 20 ist der Wägesensor 17 innerhalb des Aufhängepunktes B angeordnet, der über ein Justierelement 18 ausgerichtet werden kann. Die Verbindung zum Flansch 13b, der an der Schalenwaage 10 ortsfest angeordnet ist, erfolgt über einen Dämpfer 14, eine Aufnahme 15 und eine Kugelauflage 16. Die Kugelauflage 16 kann mit dem Wägesensor 17 lösbar befestigt werden, beispielsweise durch ein Gewinde auf einen Zapfen aufgeschraubt werden. Die oberste Fläche der Kugelauflage 16 weist eine kugelförmige oder zumindest konvexe Oberfläche auf, die mit einer ebenen Fläche innerhalb der Aufnahme 15 zusammenwirkt. Die Aufnahme 15 ist topfförmig gestaltet und umgreift im Wesentlichen den oberen Teil der Kugelauflage 16, so dass eine vertikale Führung bzw. Stabilisierung gewährleistet ist. Zwischen der Aufnahme 15 und dem Flansch 13b ist der Dämpfer 14 angeordnet, der an dem Flansch 13b befestigt ist. Der Dämpfer 14 kann beispielsweise als Gummipuffer ausgebildet sein. Durch die kugelförmige Lagerung zwischen Kugelauflage 16 und Aufnahme 15 wird ein schnelles Auspendeln der Schalenwaage 10 am Rahmen 20 erreicht. Der Dämpfer 14 beruhigt die Aufhängung der Schalenwaage 10 am Rahmen 20.

Die erfindungsgemäße Aufhängung der Schalenwaage 10 an drei Aufhängepunkten A, B und C ist statisch selbsttragend, wodurch die Schalenwaage 10 eine größere Masse aufweisen kann, die bei einer geringeren Zeit auspendelt.

Mit der Erfindung kann die Schalenwaage deutlich unter 3 Sekunden austariert und gewogen werden, wodurch der Wiegezyklus sinkt. Aufgrund der erfindungsgemäßen Aufhängung der Schalenwaage ist eine Meßgenauigkeit unter 1 % möglich.

### Bezugszeichen

- 1: Wiegekastenspeiser
- 2: Auflegetisch
- 3: Faserflocken
- 4: Zuführtisch
- 5: Füllraum
- 6: Nadellattentuch
- 7: Rückstreichwalze
- 8: Öffnungswalze
- 9: Auswurfschacht
- 10: Schalenwaage
- 10a-d: Seitenwände
- 11a, b: Auswurfklappe
- 12: Betätigungssystem
- 13a-c: Flansch
- 14: Dämpfer
- 15: Aufnahme
- 16: Kugelauflage
- 17: Wägesensor
- 18: Justierelement
- 20: Rahmen
- 21a, b: Längsträger
- 22a, b: Querträger
- 30: Rahmenaufhängung
- 40: Mischband

- A, B, C: Aufhängepunkte

## Patentansprüche

1. Vorrichtung (1) zum Mischen von Faserkomponenten, eingerichtet
• zu mischende Faserkomponenten in einen Wiegebehälter (10) der Vorrichtung zu fördern und
• die Faserkomponenten nach erfolgtem Wiegen im Wiegebehälter auf einem Mischband (40) der Vorrichtung abzuwerfen
**dadurch gekennzeichnet, dass**
• der Wiegebehälter an nur drei Aufhängepunkten (A, B, C) an einem Rahmen (20) gelagert ist,
• dass jeder Aufhängepunkt (A, B, C) einen Wägesensor (17) aufweist,
• und dass der Rahmen (20) durch Längs- und Querträger (21a, 21b, 22a, 22b) gebildet wird und
• die Querträger (22a, 22b) als nach außen offenes U-Profil ausgebildet sind, wobei das offene U-Profil so angeordnet ist, dass es von den Stirnseiten (10c, 10d) des Wiegebehälters (10) wegzeigt,
• wobei der Rahmen (20) mit dem Wiegebehälter (10) ausgebildet ist, gemeinsam aus oder in die Vorrichtung zum Mischen der Faserkomponenten demontiert oder montiert zu werden.

2. Vorrichtung nach Anspruch 1, **dadurch gekennzeichnet, dass** der Wiegebehälter als nach oben offene Schalenwaage (10) ausgebildet ist, die unterhalb von Seitenwänden (10a - 10d) betätigbare Auswurfklappen (11a, 11b) aufweist.

3. Vorrichtung nach Anspruch 2, **dadurch gekennzeichnet, dass** die Aufhängepunkte (A, B, C) an Längsseiten der Seitenwände (10a, 10b) angeordnet sind.

4. Vorrichtung nach Anspruch 3, **dadurch gekennzeichnet, dass** die Wägesensoren (17) für die Aufhängepunkte (A, B, C) am Rahmen (20) angeordnet sind.

5. Vorrichtung nach Anspruch 1, **dadurch gekennzeichnet, dass** der Rahmen (20) innerhalb der Vorrichtung zum Mischen der Faserkomponenten quer zur Laufrichtung des Mischbandes (40) verfahrbar ausgebildet ist.

6. Vorrichtung nach einem der vorhergehenden Ansprüche, **dadurch gekennzeichnet, dass** jeder Aufhängepunkt (A, B, C) einen Dämpfer (14) aufweist.

7. Vorrichtung nach einem der vorhergehenden Ansprüche, **dadurch gekennzeichnet, dass** jeder Aufhängepunkt (A, B, C) eine kugelförmige oder konvexe Lagerung aufweist.

## Claims

1. Apparatus (1) for blending fibre components, adapted
• to convey fibre components to be blended into a weighing container (10) of the apparatus and
• to discharge the fibre components, after being weighed in the weighing container, onto a blending conveyor (40) of the apparatus,
**characterised in that**
• the weighing container is mounted at only three suspension points (A, B, C) on a frame (20),
• each suspension point (A, B, C) has a weighing sensor (17),
• and the frame (20) is formed by longitudinal bars and transverse bars (21a, 21b, 22a, 22b) and
• the transverse bars (22a, 22b) are in the form of a U-shaped profile that is open towards the outside, the open U-shaped profile being arranged so that it points away from the end faces (10c, 10d) of the weighing container (10),
• wherein the frame (20) with the weighing container (10) are configured to be jointly removable from or installable in the apparatus for blending the fibre components.

2. Apparatus according to claim 1, **characterised in that** the weighing container is in the form of a weigh pan (10) that is open towards the top and has actuatable discharge flaps (11a, 11b) below side walls (10a - 10d).

3. Apparatus according to claim 2, **characterised in that** the suspension points (A, B, C) are arranged on longitudinal sides of the side walls (10a, 10b).

4. Apparatus according to claim 3, **characterised in that** the weighing sensors (17) for the suspension points (A, B, C) are arranged on the frame (20).

5. Apparatus according to claim 1, **characterised in that** the frame (20) is configured to be movable inside the apparatus for blending the fibre components transversely with respect to the running direction of the blending conveyor (40).

6. Apparatus according to any one of the preceding claims, **characterised in that** each suspension point (A, B, C) has a damper (14).

7. Apparatus according to any one of the preceding claims, **characterised in that** each suspension point (A, B, C) has a spherical or convex bearing.

## Revendications

1. Dispositif (1) pour le mélange de composants fibreux, conçu
- pour acheminer des composants fibreux à mélanger dans un récipient de pesée (10) du dispositif, et
- pour décharger les composants fibreux sur une bande de mélange (40) du dispositif après la pesée dans le récipient de pesée, **caractérisé en ce que**
- le récipient de pesée est monté sur un cadre (20) en seulement trois points de suspension (A, B, C),
- chaque point de suspension (A, B, C) présente un capteur de poids (17),
- et le cadre (20) est formé par des supports longitudinaux et transversaux (21a, 21b, 22a, 22b) et
- les supports transversaux (22a, 22b) sont configurés sous forme de profilé en U ouvert vers l'extérieur, le profilé en U ouvert étant agencé de telle sorte qu'il est orienté à l'opposé des côtés frontaux (10c, 10d) du récipient de pesée (10),
- le cadre (20) étant configuré avec le récipient de pesée (10) pour qu'ils puissent être démontés du ou montés dans le dispositif pour le mélange des composants fibreux ensemble.

2. Dispositif selon la revendication 1, **caractérisé en ce que** le récipient de pesée est configuré sous forme de balance à plateaux (10) ouverte vers le haut, qui présente des clapets de déchargement (11a, 11b) actionnables au-dessous de parois latérales (10a-10d).

3. Dispositif selon la revendication 2, **caractérisé en ce que** les points de suspension (A, B, C) sont agencés sur des côtés longitudinaux des parois latérales (10a, 10b).

4. Dispositif selon la revendication 3, **caractérisé en ce que** les capteurs de poids (17) pour les points de suspension (A, B, C) sont agencés sur le cadre (20).

5. Dispositif selon la revendication 1, **caractérisé en ce que** le cadre (20) est configuré pour pouvoir être déplacé à l'intérieur du dispositif pour le mélange des composants fibreux transversalement à la direction de circulation de la bande de mélange (40).

6. Dispositif selon l'une quelconque des revendications précédentes, **caractérisé en ce que** chaque point de suspension (A, B, C) présente un amortisseur (14).

7. Dispositif selon l'une quelconque des revendications précédentes, **caractérisé en ce que** chaque point de suspension (A, B, C) présente un palier sphérique ou convexe.
